# NEUE EUROPÄISCHE PATENTSCHRIFT

(11) **EP 2 176 566 B2**
(45) Veröffentlichungstag und Bekanntmachung des Hinweises auf die Entscheidung über den Einspruch: **28.06.2023**
(45) Hinweis auf die Patenterteilung: 05.06.2013
(21) Anmeldenummer: 08801063.2
(22) Anmeldetag: 24.07.2008
(51) Int. Cl.: F16F 15/123, F16H 45/02

(54) **Kraftübertragungseinrichtung umfassend eine hydrodynamische Komponente und eine Überbrückungskupplung sowie eine Vorrichtung zur Dämpfung von Schwingungen**
Power transmission means comprising a hydrodynamic component and a lock-up clutch, and a device for damping vibrations
Dispositif de transmission de puissance comprenant un composant hydrodynamique et un embrayage de verrouillage et un dispositif pour amortir les vibrations

(30) Priorität: 02.08.2007 DE 102007036193
(43) Veröffentlichungstag der Anmeldung: 21.04.2010
(73) Patentinhaber: Schaeffler Technologies AG & Co. KG, 91074 Herzogenaurach (DE)
(72) Erfinder: DEGLER, Mario, 76534 Baden-Baden (DE)
(74) Vertreter: DTS Patent- und Rechtsanwälte Schnekenbühl und Partner mbB
(86) Internationale Anmeldenummer: PCT/DE2008/001223
(87) Internationale Veröffentlichungsnummer: WO 2009/018801

(56) Entgegenhaltungen:
- FR-A- 1 396 803
- JP-A- 10 047 453

## Beschreibung

Die Erfindung betrifft eine Kraftübertragungseinrichtung umfassend eine Vorrichtung zur Dämpfung von Schwingungen, insbesondere einen mehrstufigen Drehschwingungsdämpfer, umfassend zumindest zwei parallel geschaltete, koaxial angeordnete Dämpferanordnungen, eine erste Dämpferanordnung und eine zweite Dämpferanordnung.

Vorrichtungen zur Dämpfung von Schwingungen, insbesondere in Form von mehrstufigen Drehschwingungsdämpfern beziehungsweise Torsionsschwingungsdämpfern, sind in einer Vielzahl von Ausführungen aus dem Stand der Technik vorbekannt. Diese fungieren bei Anordnung in einem Antriebsstrang in Kraftflussrichtung betrachtet zwischen einem Antrieb und einem Abtrieb und Kopplung mit den diese bildenden Anschlusselementen als elastische Kupplung. Diese überträgt Drehmoment und kompensiert gleichzeitig Schwingungen bei Leistungsübertragung. Denkbar ist auch eine Ausführung als Tilger. In diesem Fall erfolgt über die Vorrichtung zwischen den benachbarten Anschlusselementen keine Drehmomentübertragung, sondern es werden über die einzelnen Komponenten lediglich Drehmomentstöße abgebaut. Derartige Vorrichtungen zur Dämpfung von Schwingungen basieren je nach Dämpfungsart auf unterschiedlichen Funktionsprinzipien. Bekannt sind neben rein mechanischen Dämpferlösungen auch hydraulische oder kombiniert mechanisch- hydraulische Dämpferlösungen. Mechanische Dämpfer umfassen einen ein- oder mehrteiligen, je nach Kraftflussrichtung als Eingangsteil oder Ausgangsteil der Vorrichtung zur Dämpfung von Schwingungen fungierenden Drehteil, insbesondere einen Primärteil und einen Sekundärteil, die koaxial zueinander angeordnet sind und in Umfangsrichtung relativ zueinander begrenzt verdrehbar sind. Die Kopplung zwischen dem Eingangsteil und dem Ausgangsteil erfolgt über Mittel zur Drehmomentübertragung und Mittel zur Dämpfung von Schwingungen, die in der Regel von Federeinheiten, umfassend zumindest ein Federelement in Form einer Druckfeder gebildet werden. Über die Größe des Verdrehwinkels zwischen Eingangsteil und Ausgangsteil und die Federkraft können die Schwingungen kompensiert und abgebaut werden.

Aus der Druckschrift DE 30 47 039 A1 ist eine Ausführung einer zweistufigen Vorrichtung zur Dämpfung von Schwingungen zur Übertragung von Drehmoment zwischen einem Antrieb und einem Abtrieb vorbekannt, welche zwei in Reihe geschaltete Dämpferanordnungen umfasst. Um eine größere Relativbewegung zwischen den treibenden und getriebenen Elementen der Vorrichtung zur Dämpfung von Schwingungen zu ermöglichen, wurde die Vorrichtung zweistufig ausgeführt. Diese weist dabei zwei konzentrische Kreise von Dämpfungsfedern auf, die in einem Gehäuse angeordnet sind und von Antriebszungen angetrieben werden, die an einem Antriebselement montiert sind, beispielsweise einer Kolbenplatte für eine Sperrkupplung. Schwimmende Elemente separieren dabei die Federn in den inneren und äußeren Federkreisen in zwei oder mehreren Federgruppen. Dabei arbeiten die zwei oder mehreren Federgruppen in jedem Kreis parallel zueinander, während die Federn in jeder einzelnen Gruppe in Reihe wirken. Im Kraftfluss erfolgt damit die Leistungsübertragung in Reihe. Der innen liegende Dämpfer ist frei von einem Verdrehspiel, das heißt ist immer wirksam.

Aus der Druckschrift US 2004/0216979 A1 ist eine Ausführung einer Vorrichtung zur Dämpfung von Schwingungen, umfassend zumindest zwei Dämpferanordnungen, vorbekannt, die parallel geschaltet sind, wobei beide Dämpferanordnungen immer wirksam sind. Die Dämpferanordnung für die kleineren Verdrehwinkel ist hier auf einem radial inneren Durchmesser angeordnet, während das größere Verdrehspiel über die zweite Dämpferanordnung auf einem radial äußeren Durchmesser realisiert wird. Die radial innere Dämpferanordnung ist als Reihendämpfer ausgeführt, umfassend über einen Flansch separierte und hintereinander geschaltete Federelemente.

Aus der Druckschrift US 2004/0185940 ist eine als Reihen-Parallel-Dämpfer ausgeführte Vorrichtung zur Dämpfung von Schwingungen vorbekannt, umfassend ein erstes Drehelement und ein zweites Drehelement, die relativ zueinander begrenzt in Umfangsrichtung verdrehbar sind. Ferner umfasst die Vorrichtung ein Paar von ersten, in einer Drehrichtung ausgerichteten und in Reihe geschalteten elastischen Elementen, die über einen schwimmenden Zwischenflansch gekoppelt sind, und ein weiteres zweites elastisches Element, das parallel zu den ersten elastischen Elementen geschaltet ist, wobei das zweite elastische Element derart ausgelegt ist, in der Drehrichtung zusammengedrückt zu werden, nachdem das Paar von ersten elastischen Elementen aufgrund einer relativen Drehung des ersten Drehelementes und des zweiten Drehelementes auf einen ersten Winkel zusammengedrückt wurde. Dem zweiten elastischen Element ist dazu ein Freiwinkel zugeordnet, der im schwimmenden Flansch integriert ist. Die Anordnung von ersten und zweiten elastischen Elementen erfolgt zur Verringerung des radialen Bauraumes auf einem Durchmesser oder in radialer Richtung hinsichtlich der sich durch die Erstreckung der Federelemente theoretisch ergebenden ringförmigen Bereiche einander überlappend. Die Kopplung zwischen den ersten elastischen Elementen erfolgt über einen schwimmenden Flansch.

Eine weitere Ausführung einer Reihen-Parallel-Dämpfervorrichtung ist aus der Druckschrift US 3,138 011 vorbekannt. Der dort beschriebene Dämpfer weist einen Abtriebsflansch auf, der einstückig ausgeführt ist, jedoch in seiner Herstellung und Ausgestaltung sehr aufwendig ist.

Weiterhin zeigt die US 2007/0051577 A1 eine Dämpferanordnung zum Dämpfen des von einer Turbine eines Drehmomentenwandlers an ein Getriebe abgegebenen Drehmoments. Hierbei wird vorgeschlagen, zwischen einer Deckplatte und einem Abtriebsflansch einen ersten (einzelnen) Dämpfer in Reihe zu einer Parallelschaltung aus zwei Dämpfern anzuordnen. Die JP-A-10047453 zeigt schließlich eine gattungsgemäße Kraftübertragungseinrichtung.

Allen vorgenannten Ausführungen gemeinsam ist die Erzielung einer Federkennlinie im Hinblick auf ein gewünschtes Verhalten in einem bestimmten Betriebsbereich.

Der Erfindung liegt daher die Aufgabe zugrunde, eine Kraftübertragungseinrichtung umfassend eine Vorrichtung zur Dämpfung von Schwingungen mit niedriger Federrate bei geringen Drehmomenten zu schaffen, wobei die Vorrichtung zur Dämpfung von Schwingungen durch eine relativ flache Kennliniencharakteristik charakterisiert ist. Dieser auf die Übertragung eines Teiles des theoretisch maximal möglichen Momentes auslegbare Kennfeldbereich soll dabei durch einen möglichst großen Verdrehwinkelbereich zwischen den als Ein- und Ausgangsteil fungierenden Drehelementen beschreibbar sein. Die erfindungsgemäße Lösung soll sich dabei durch einen geringen konstruktiven und fertigungstechnischen Aufwand auszeichnen und ferner zur Integration in Kraftübertragungsvorrichtungen für den Einsatz in Antriebssträngen geeignet sein, wobei die Vorrichtung zur Dämpfung von Schwingungen möglichst in radialer und axialer Richtung klein bauen soll.

Die erfindungsgemäße Lösung ist durch die Merkmale des Anspruches 1 charakterisiert. Vorteilhafte Ausgestaltungen sind in den Unteransprüchen beschrieben.

Eine Vorrichtung zur Dämpfung von Schwingungen, insbesondere ein mehrstufiger Reihen-Parallel-Drehschwingungsdämpfer, umfasst zumindest zwei parallel geschaltete und koaxial angeordnete und mindestens einen Eingangs- und einen Ausgangsteil aufweisende Dämpferanordnungen, eine erste Dämpferanordnung und eine zweite Verdrehspiel aufweisende Dämpferanordnung, wobei eine der Dämpferanordnungen als Reihendämpfer, umfassend zwei zumindest in Reihe geschaltete und über einen Zwischenflansch gekoppelte einzelne Dämpfer, ausgebildet ist. Die Anordnung der ersten Dämpferanordnung erfolgt erfindungsgemäß auf einem Durchmesser in radialer Richtung, der größer ist als der Durchmesser der Anordnung der zweiten Dämpferanordnung. Ausgangsteil der ersten Dämpferanordnung und Ausgangsteil der zweiten Dämpferanordnung bilden eine bauliche Einheit.

Die erfindungsgemäße Lösung ermöglicht es zum einen, eine sehr kompakte kombinierte Dämpfungsanordung zu schaffen, bei welcher der Schwingungsdämpfer durch eine möglichst niedrige Federrate in einem möglichst großen Verdrehwinkelbereich mit niedriger Reibung charakterisiert ist. Die Herstellung ist aufgrund der Funktionskonzentration in einzelnen Bauteilen relativ einfach und mit geringen Kosten verbunden.

Die zweite Dämpferanordnung ist dabei möglichst in geringem Abstand zur Rotationsachse angeordnet. Beide Dämpferanordnungen sind koaxial zueinander angeordnet und können in axialer Richtung mit Versatz oder aber vorzugsweise in einer Ebene angeordnet werden. Im letztgenannten Fall baut die Dämpferanordnung in Form des mehrstufigen Dämpfers, bei welchem die Dämpferkennlinie aufgrund der separaten Ausgestaltung der einzelnen Dämpferanordnung variabel eingestellt werden kann, in axialer Richtung und auch radialer Richtung relativ klein.

Aufgrund der Anordnung der ersten Dämpferanordnung in radialer Richtung außen können über diese große Verdrehwinkel realisiert werden, wobei die erste Dämpferanordnung in diesem Verdrehwinkelbereich wirksam ist und somit eine Dämpfung auch bei höheren Momenten realisiert werden kann. In einer besonders vorteilhaften Ausführung umfasst die erste Dämpferanordnung zumindest zwei in Reihe geschaltete Dämpfer, einen ersten und einen zweiten Dämpfer, wobei jeweils das Ausgangsteil eines Dämpfers den Eingangsteil des anderen Dämpfers bildet oder aber drehfest mit diesem gekoppelt ist. Gemäß einer besonders vorteilhaften Ausführung wird dabei der Reihendämpfer auf einem gemeinsamen Durchmesser realisiert, das heißt, die zwei einzelnen Dämpfer sind auf einem gemeinsamen Durchmesser angeordnet und frei von Versatz in radialer Richtung. In diesem Fall können die radialen Abmessungen für den Gesamtdämpfer gering gehalten werden.

Jeder der einzelnen Dämpfer einer Reihendämpferanordnung weist dazu vorzugsweise identisch dimensionierte Mittel zur Drehmomentübertragung und/oder Mittel zur Dämpfungskopplung auf. Dadurch ist es möglich, bei entsprechender Integration im Gesamtsystem hier auch eine Verdrehwinkelrichtungsunabhängigkeit zu realisieren und in jedem Fall das Drehmoment über den Ausgang der ersten Dämpferanordnung in Kombination mit dem über die zweite Dämpferanordnung geleiteten Moment zu einem anzutreibenden Element in einem Antriebsstrang zu leiten.

Gemäß einer weiteren Ausführung ist es auch denkbar, die einzelnen Dämpfer der ersten Dämpferanordnung auf unterschiedlichen Durchmessern anzuordnen. In diesem Fall können theoretisch auch die Übertragungselemente unterschiedlich ausgelegt werden.

Die einzelnen Dämpfer der als Reihendämpfer ausgeführten ersten Dämpferanordnung sind über einen Zwischenflansch, der je nach Anbindung als Mitnehmerscheibe oder als schwimmender Flansch ausgeführt sein kann, miteinander gekoppelt. Dieser ist dazu als ringförmiges Element mit in radialer Richtung am Innenumfang in Richtung zur Rotationsachse weisenden und in Umfangsrichtung ausgerichtete Anschlagflächen für die Mittel zur Drehmomentübertragung und Dämpfungskopplung bildenden Vorsprüngen ausgeführt.

Ein weiterer radial innerhalb der Erstreckung des Zwischenflansches liegender Flansch, der als ringförmiges Element mit am Außenumfang in radialer Richtung ausgerichteten Vorsprüngen ausgeführt. Dieses fungiert je nach Anbindung als Ein- oder Ausgangsteil für die zweite Dämpferanordnung.

Das Verdrehspiel der zweiten Dämpferanordnung ist durch einen vordefinierten, einen Freiwinkel beschreibenden Verdrehwinkel zwischen Eingangsteil und Ausgangsteil der zweiten Dämpferanordnung charakterisiert, in welchem die zweite Dämpferanordnung nicht wirksam ist. Der Verdrehwinkel ist im Ausgangsteil integriert.

Jede der einzelnen Dämpferanordnungen umfasst in Kraftflussrichtung betrachtet einen als Eingangsteil fungierenden Primärteil und einen als Ausgangsteil fungierenden Sekundärteil. Die Funktion ist je nach Kraftflussrichtung und Änderung dieser austauschbar, das heißt wechselt. Dabei können die Eingangs- und Ausgangsteile einteilig oder mehrteilig ausgebildet werden. Vorzugsweise werden jeweils einteilige Ausführungen in Scheibenform gewählt. Diese sind über die Mittel zur Drehmomentübertragung und Mittel zur Dämpfungskopplung miteinander gekoppelt. Die Mittel zur Drehmomentübertragung und zur Dämpfungskopplung werden von elastischen Elementen, insbesondere Federeinheiten, gebildet. Dabei sind die einzelnen Federeinheiten als Einzelfeder ausgeführt oder aber können auch als hintereinander geschaltete Federeinheiten vorliegen. Die einzelne Dämpferanordnung fungiert dabei jeweils als elastische Kupplung, die Drehmoment überträgt und gleichzeitig Schwingungen kompensiert. Die erste Dämpferanordnung umfasst zumindest sowohl einen Eingangsteil als auch einen Ausgangsteil. Das gleiche gilt für die zweite Dämpferanordnung, wobei jedoch der Eingangsteil der ersten und der zweiten Dämpferanordnung miteinander gekoppelt beziehungsweise parallel geschaltet sind, so dass hier eine Momentenaufteilung über die beiden Dämpferanordnungen erfolgen kann.

Zur Realisierung der Parallelschaltung bilden Eingangs- und Ausgangsteile der einzelnen Dämpferanordnungen eine bauliche Einheit, d.h. können beispielsweise miteinander drehfest gekoppelt sein. In diesem Fall sind die einzelnen Eingangs- und Ausgangsteile als separate Elemente ausgeführt, die funktional lediglich über die Verbindung miteinander gekoppelt sind. Gemäß einer besonders vorteilhaften Ausführung wird jedoch eine integrale Bauweise angestrebt, das heißt, Eingangsteil und Ausgangsteil der ersten und zweiten Dämpferanordnung sind jeweils einteilig ausgeführt, das heißt, die den Eingangsteil beziehungsweise Ausgangsteil bildenden Elemente der ersten Dämpferanordnung sind gleichzeitig als Eingangsteil beziehungsweise Ausgangsteil der zweiten Dämpferanordnung ausgeführt.

Die Vorrichtung ist als mechanischer Reibdämpfer ausgeführt. Diese umfasst im einfachsten Fall zumindest zwei in axialer Richtung angeordnete und drehfest miteinander gekoppelte Seitenscheiben, die als Mitnehmerscheiben oder als Ausgangsteil fungieren können. Die Seitenscheiben umfassen dabei in Umfangsrichtung ausgebildete Öffnungen zur Aufnahme und Ausbildung von einander entgegengesetzt ausgebildeten Anschlagflächen für die Federelemente der einzelnen Dämpferanordnungen und der Dämpfer der ersten Dämpferanordnung. Dabei sind die Anschlagflächen in Umfangsrichtung bildenden Ausnehmungen beziehungsweise Durchgangsöffnungen derart zueinander angeordnet, dass für die zweite Dämpferanordnung ein Freiwinkel, das heißt ein Verdrehbereich zwischen Eingangs- und Ausgangsteil realisierbar ist, der keinerlei Wirkung im Hinblick auf die zweite Dämpfervorrichtung zeigt, das heißt, die zweite Dämpfervorrichtung erst dann wirksam wird, wenn ein bestimmter vordefinierter Verdrehwinkel zwischen Eingangsteil und Ausgangsteil erzielt wird.

In Analogie gilt diese Aussage auch für den zwischen den beiden Seitenscheiben angeordneten Flansch, insbesondere das scheibenförmige Element in Form des Flansches, der gleichzeitig den Ausgangsteil der ersten und der zweiten Dämpferanordnung bildet.

Je nach Zuordnung und Kopplung beziehungsweise Anbindung in einer Kraftübertragungseinheit können die unterschiedlichen Elemente jeweils als Eingangsteil fungieren. Dies hängt davon ab, welche der Elemente mit der Antriebsanordnung gekoppelt werden und welche mit der Abtriebsseite in Kraftflussrichtung betrachtet. Gemäß einer ersten Ausführung kann der Antrieb über Seitenscheiben realisiert werden. In diesem Fall sind diese drehfest mit einem antreibenden Element, beispielsweise in einer Kraftübertragungsvorrichtung einer Überbrückungskupplung oder einer Antriebsmaschine wenigstens mittelbar gekoppelt. Die Leistungsübertragung erfolgt dann in der ersten Dämpferanordnung auf den Zwischenflansch und von diesem auf den Flansch, welcher das Ausgangsteil der Vorrichtung sowie den Ausgangsteil der zweiten Dämpferanordnung bildet.

Gemäß einer weiteren zweiten Ausführung ist es auch denkbar, die Leistung über den Flansch einzuleiten. In diesem Fall erfolgt die Leistungsübertragung auf die Seitenscheiben der ersten und zweiten Dämpferanordnung, die als Ausgangsteil fungieren.

Die erfindungsgemäße Lösung ist nicht auf die beschriebenen Ausführungen beschränkt. Konstruktive Details liegen im Ermessen des zuständigen Fachmannes.

Die erfindungsgemäße Lösung ist nachfolgend anhand von Figuren erläutert. Darin ist im Einzelnen Folgendes dargestellt:
- Figur 1a: verdeutlicht in schematisiert vereinfachter Darstellung den Grundaufbau und das Grundprinzip einer erfindungsgemäßen Vorrichtung zur Dämpfung von Schwingungen in Form eines Reihen-Parallel-Dämpfers;
- Figuren 1b und 1c: verdeutlichen in schematisiert vereinfachter Darstellung anhand zweier Ansichten, insbesondere eines Axialschnittes und einer Ansicht B-B gemäß Figur 1b eine erfindungsgemäße Vorrichtung zur Dämpfung von Schwingungen in Form eines zweistufigen Reihen-Parallel-Dämpfers;
- Figur 2: verdeutlicht in einer Seitenansicht die Ausführung der Seitenscheiben der Dämpferanordnung;
- Figur 3: verdeutlicht anhand eines Diagramms die Kennlinie einer erfindungsgemäß ausgeführten mehrstufigen Vorrichtung zur Dämpfung von Schwingungen.

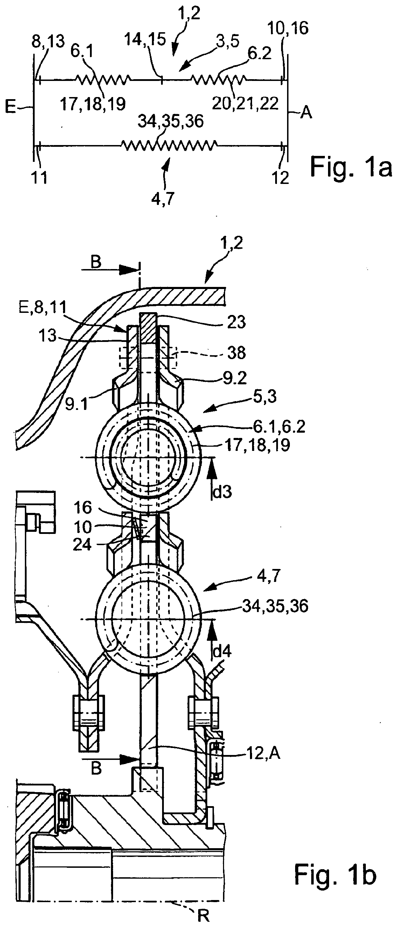

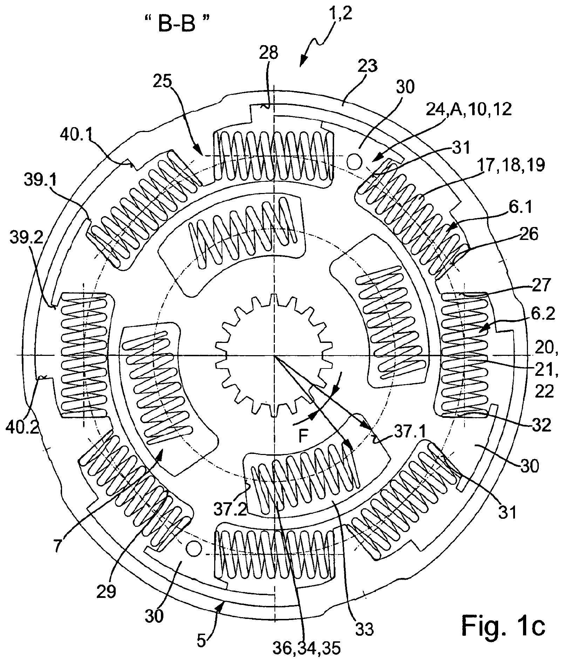

Die Figur 1a verdeutlicht in schematisiert vereinfachter Darstellung den Grundaufbau und das Grundprinzip einer erfindungsgemäß ausgeführten Vorrichtung 1 zur Dämpfung von Schwingungen, insbesondere in Form eines Drehschwingungsdämpfers beziehungsweise Torsionsschwingungsdämpfers. Die erfindungsgemäße Vorrichtung 1 zur Dämpfung von Schwingungen ist als mehrstufiger Reihen-Parallel-Dämpfer 2 ausgeführt. Die Vorrichtung 1 zur Dämpfung von Schwingungen umfasst funktional zwei Dämpferstufen 3,4, die jeweils von einer Dämpferanordnung - einer ersten Dämpferanordnung 5 und einer zweiten Dämpferanordnung 7 - gebildet werden und parallel geschaltet sind. Parallel geschaltet bedeutet dabei, dass beide Dämpferanordnungen 5 und 7 im Kraftfluss parallel angeordnet sind. Der Kraftfluss erfolgt parallel beziehungsweise über beide Dämpferanordnungen 5 und 7. Die erste Dämpferanordnung 5 ist dabei erfindungsgemäß als Reihendämpfer ausgeführt, das heißt, umfasst zumindest zwei in Reihe geschaltete Dämpfer 6.1 und 6.2. In Reihe geschaltet bedeutet dabei, dass die Leistungsübertragung im Kraftfluss in Reihe erfolgt, insbesondere beide Dämpfer 6.1 und 6.2 in der Dämpferstufe 3 nacheinander durchlaufen werden, wobei die Richtung in Abhängigkeit von der Krafteinleitungsrichtung bestimmt wird. In Figur 1 a erfolgt der Kraftfluss beispielhaft über den Dämpfer 6.1 und 6.2.

Jede der Dämpferstufen 3 und 4 ist dabei in unterschiedlichen Betriebsbereichen wirksam. Insbesondere ist die Dämpferanordnung 7 der zweiten Dämpferstufe 4 derart ausgeführt, dass diese erst nach einem vordefinierten Verdrehwinkel F, welcher auch als Freiwinkel bezeichnet wird, wirksam wird. Beide Dämpferanordnungen 5 und 7 sind parallel angeordnet und zu dem zweistufigen Reihen-Parallel-Dämpfer zusammengefasst. Jede der einzelnen Dämpferanordnungen 5 und 7 umfasst ein- oder mehrteilig ausgeführte und in Kraftflussrichtung betrachtet als Eingangsteile und Ausgangsteile fungierende Drehelemente, die über Mittel zur Drehmomentübertragung und/oder Mittel zur Dämpfungskopplung miteinander gekoppelt sind. Vorzugsweise werden beim Einsatz mechanischer Dämpfungskonzepte die Mittel zur Drehmomentübertragung und die Mittel zur Dämpfungskopplung von den gleichen Baueinheiten gebildet, vorzugsweise von Federeinheiten. Dabei sind die Eingangs- und Ausgangsteile der einzelnen Dämpferanordnungen 5, 7 und der einzelnen Dämpfer 6.1, 6.2 der Dämpferanordnung 5 jeweils koaxial zueinander angeordnet und in Umfangsrichtung begrenzt gegeneinander verdrehbar. Der Begriff Ein- und Ausgangsteil bezieht sich dabei in Kraftflussrichtung betrachtet auf den Kraftfluss bei Anordnung in einem Antriebsstrang von einem treibenden zu einem getriebenen Bauteil. Die Funktionen als Ein- und Ausgangsteil können dabei unterschiedlichen Bauteilen in unterschiedlichen Betriebszuständen zugeordnet sein, das heißt beim Einsatz in Fahrzeugen in Antriebssträngen im Traktionsbetrieb fungieren Elemente, die mit einer Antriebsmaschine koppelbar sind, als Eingangsteil, während im Schubbetrieb eine Umkehr der Funktion erfolgt, indem das im Traktionsbetrieb als Ausgangsteil fungierende Element nunmehr als Eingangsteil fungiert.

Die Vorrichtung 1 umfasst im Kraftfluss betrachtet einen Eingangsteil E und einen Ausgangsteil A. Der Eingangsteil E wird dabei von einem Element der Dämpferanordnung 5 und der Dämpferanordnung 7 als bauliche Einheit gebildet oder aber die Eingangsteile der Dämpferanordnungen 5 und 7 sind drehfest miteinander verbunden. Die Dämpferanordnung 5 umfasst einen Eingangsteil 8 und einen Ausgangsteil 10. Die Dämpferanordnung 7 umfasst einen Eingangsteil 11 und ein Ausgangsteil 12. Dabei werden die Eingangsteile 8 und 11 vorzugsweise direkt vom Eingangsteil E gebildet und die Ausgangsteile 10, 12 vom Ausgangsteil A. In der ersten Dämpferanordnung 5 sind zwei Dämpfer in Reihe geschaltet, der Dämpfer 6.1 und der Dämpfer 6.2. Dabei wird der Eingang 8 der ersten Dämpferanordnung, der drehfest mit dem Eingang E der Gesamteinheit verbunden ist oder vorzugsweise von diesem direkt gebildet wird, vom Eingangsteil 13 des ersten Dämpfers 6.1 gebildet. Der erste Dämpfer 6.1 umfasst ferner einen Ausgangsteil 14, der gleichzeitig den Eingangsteil 15 des zweiten Dämpfers 6.2 der beiden in Reihe geschalteten Dämpfer der Dämpferanordnung 5 bildet oder mit diesem drehfest verbunden ist. Der zweite Dämpfer 6.2 umfasst ferner einen Ausgangsteil 16, der den Ausgangsteil 10 der Dämpferanordnung 5 bildet und der mit dem Ausgang A drehfest verbunden ist oder diesen bildet. Der erste Dämpfer 6.1 umfasst Mittel 17 zur Drehmomentübertragung zwischen dem Eingangsteil 13 und dem Ausgangsteil 14 und Mittel 18 zur Dämpfungskopplung. In Analogie umfasst der zweite Dämpfer 6.2 Mittel 20 zur Drehmomentübertragung und Mittel 21 zur Dämpfungskopplung. Die zweite Dämpferanordnung 7 umfasst zumindest einen Dämpfer, bei welchem der Eingangsteil 11 und der Ausgangsteil 12 über Mittel 34 zur Drehmomentübertragung und Mittel 35 zur Dämpfungskopplung miteinander gekoppelt sind. Der Kraftfluss erfolgt zwischen dem Eingangsteil E und dem Ausgangsteil A der Vorrichtung je nach Drehrichtung in der ersten Dämpfungsanordnung 5 über den Dämpfer 6.1 und den Dämpfer 6.2 beziehungsweise umgekehrt und gleichzeitig nach Erreichen des vordefinierten Verdrehwinkels zwischen Eingangsteil E und Ausgangsteil A die Dämpferanordnung 7.

In der Figur 1a im Grundprinzip nicht dargestellt ist, dass die zweite Dämpferanordnung 7 nicht sofort bei Auftreten eines Verdrehwinkels zwischen Ein- und Ausgangsteil E, A wirksam wird, sondern erst nach Erreichen eines bestimmten Verdrehwinkels zwischen dem Eingangsteil E und dem Ausgangsteil A. Dieser Winkel wird auch als Freiwinkel bezeichnet. Wird dieser erreicht, wird die zweite Dämpferstufe 4, welche von der zweiten Dämpferanordnung 7 gebildet wird, zugeschaltet.

Die Figuren 1b und 1c verdeutlichen eine erfindungsgemäß ausgeführte Vorrichtung zur Dämpfung von Schwingungen 1, insbesondere eine mehrstufige Reihen-Parallel-Dämpferanordnung 2 in zwei Ansichten. Die Figur 1b verdeutlicht die Vorrichtung 1 zur Dämpfung von Schwingungen im Axialschnitt, die Figur 1c zeigt eine Ansicht B - B von rechts. In dieser Ansicht ist insbesondere die Anordnung der Flansche 23, 24 in der Neutralstellung, d.h. frei von Drehmoment dargestellt.

Die Anordnung der ersten Dämpferstufe 3 erfolgt in radialer Richtung bezogen auf die Rotationsachse R der Vorrichtung 1 auf einem größeren Durchmesser d₃ als die zweite weitere Dämpferstufe 4 auf d₄. Damit erfolgt die Anordnung der ersten Dämpferanordnung 5 radial außen, während die Anordnung der zweiten Dämpferanordnung 7 innerhalb der Erstreckung des Innendurchmessers der ersten Dämpferanordnung 5 und damit auf einem kleineren Durchmesser d₄ erfolgt. Der Eingangsteil E der Vorrichtung 1 und damit die Eingangsteile 8, 10 der Dämpferanordnungen 5, 7 werden von zwei nebeneinander beabstandet angeordneten und koaxial zueinander ausgebildeten Mitnehmerscheiben 9.1 und 9.2 gebildet, die drehfest miteinander gekoppelt sind. Zwischen den Mitnehmerscheiben 9.1 und 9.2 ist der Ausgangsteil 10 angeordnet, der drehfest mit dem Ausgangsteil 12 der Dämpferanordnung 7 verbunden ist oder aber mit diesem vorzugsweise eine bauliche Einheit in Form eines Bauteils und gleichzeitig den Ausgang A bildet. Die erste Dämpferanordnung 5 besteht aus den zwei Dämpfern 6.1 und 6.2. Die Nummerierung der Ein- und Ausgangsteile gemäß Figur 1a wird beibehalten. Der Eingangsteil 13 des ersten Dämpfers 6.1 wird dabei von den Mitnehmerscheiben 9.1 und 9.2 gebildet. Dies gilt in Analogie auch für den Eingangsteil 11 der zweiten Dämpferanordnung 7, wobei der Eingangsteil 11 hier ebenfalls von den Mitnehmerscheiben 9.1 und 9.2 gebildet wird oder aber mit diesen drehfest gekoppelten Elementen. Der erste Dämpfer umfasst Mittel 17 zur Drehmomentübertragung zwischen dem Eingangsteil 13 und dem Ausgangsteil 14 und Mittel 18 zur Dämpfungskopplung, wobei hier die Mittel 17 und die Mittel 18 von einer Baueinheit, insbesondere einer Federeinheit 19, umfassend zumindest ein Federelement in Form einer Druckfeder gebildet werden. In Analogie umfasst auch der zweite Dämpfer 6.2 Mittel 20 zur Drehmomentübertragung und Mittel 21 zur Dämpfungskopplung, wobei diese von einer weiteren Federeinheit 22 gebildet werden. Der Eingangsteil 13 wird, wie bereits ausgeführt, von den Mitnehmerscheiben 9.1 und 9.2 gebildet, der Ausgangsteil 14 von einem so genannten schwimmenden Zwischenflansch 23, der frei von einer eigenen Lagerung oder drehfesten Anbindung an ein Anschlusselement ist. Der Zwischenflansch 23 bildet den Eingangsteil 15 des zweiten Dämpfers 6.2. Der Ausgangsteil 16 des zweiten Dämpfers 6.2 und damit der Ausgangsteil 10 beziehungsweise A der Vorrichtung 1 wird von einem Flansch 24 gebildet. Die Mittel 17 und 18 beziehungsweise die einzelnen Federeinheiten 19 des ersten Dämpfers 6.1 stützen sich in den Mitnehmerscheiben 9.1 und 9.2, dem Flansch 24 oder dem Zwischenflansch 23 ab, während die Federeinheiten 22 des zweiten Dämpfers 6.2 sich ebenfalls an den Mitnehmerscheiben 9.1, 9.2 oder dem Zwischenflansch 23 und dem Flansch 24 in Umfangsrichtung abstützen können.

Der Zwischenflansch 23 ist in dieser Ausführung als schwimmender Flansch ausgebildet, das heißt, dieser besitzt keine eigene Lagerung und wird lediglich durch die Federeinheiten 19, 22 und die Anordnung des Flansches 24 beziehungsweise der Seitenscheiben 9.1 und 9.2 zwischen den Federeinheiten 19, 22 gehalten. Der Zwischenflansch 23 ist als ringförmiges Element ausgeführt, welches an seinem Innenumfang in Richtung zur Rotationsachse R weisende Vorsprünge 25 aufweist, die in Umfangsrichtung ausgerichtete und einander entgegengesetzt gerichtet Anschlagflächen 26 und 27 für die Federeinheiten 19 beziehungsweise 22 der Dämpfer 6.1 und 6.2 bilden.

Der Flansch 24 bildet hier den Ausgangsteil 10, 12 sowohl der ersten als auch der zweiten Dämpferanordnung 5, 7 und damit auch den Ausgangsteil A der gesamten Vorrichtung 1 zur Dämpfung von Schwingungen. Dieser ist dazu als scheibenförmiges Element ausgebildet.

In der in der Figur 1c dargestellten Ausführung handelt es sich beim Zwischenflansch 23 um einen in radialer Richtung äußeren Zwischenflansch, welcher an seinem Innenumfang 28 die Vorsprünge aufweist, die zueinander gleichmäßig beabstandet in Umfangsrichtung ausgeführt sind. Der Flansch 24, welcher den Ausgangsteil 10 beziehungsweise 12 der Dämpferanordnungen 5, 7 bildet, ist als radial innerer Flansch ausgeführt und weist an seinem Außenumfang 29 in radialer Richtung nach außen, das heißt sich von der Rotationsachse R weg erstreckende und in Umfangsrichtung im gleichmäßigen Abstand zueinander angeordnete Vorsprünge 30 auf, wobei zwei einander benachbarte Vorsprünge 30 sich in Umfangsrichtung erstreckende randoffene Aussparungen beschreiben, in welchen die beiden Federeinheiten 19 und 22 der einzelnen Dämpfer 6.1 und 6.2 angeordnet werden und sich an den einander gegenüberliegenden Seitenflächen 31 und 32 einer derartigen Aussparung am Flansch 24 abstützen. Der Flansch 24 beinhaltet auf seinem Durchmesser d₄ ferner Ausnehmungen 33 in Form von sich in Umfangsrichtung erstreckenden Öffnungen, welche Abstützflächen 37.1, 37.2 für die Federeinheiten 36 der Mittel 34 zur Drehmomentübertragung beziehungsweise 35 zur Dämpfungskopplung bilden. Die Abstützflächen 37.1, 37.2 sind in Umfangsrichtung einander gegenüberliegend angeordnet. Diese Abstützflächen 37.1, 37.2 werden jedoch erst nach einem bestimmten Verdrehwinkel F, welcher beispielsweise zwischen 3 bis 50° beträgt, wirksam. Die Federeinheiten 36 stützen sich an den Seitenscheiben 9.1 und 9.2 und dem Flansch 24 ab.

Bei dieser Ausführung wird in Kraftflussrichtung beim Einsatz in Antriebssträngen und Fahrzeugen im normalen Traktionsbetrieb von der Antriebsmaschine zu einer nachgeordneten Leistungsübertragungseinheit betrachtet über die Mitnehmerscheiben 9.1 und 9.2, welche drehfest miteinander gekoppelt sind, ein Moment in die Dämpferanordnung 5 eingeleitet, wobei gemäß Figur 1c je nach Drehrichtung die Federeinheiten 19 oder 22 beaufschlagt werden, die wiederum auf den Zwischenflansch 23, insbesondere den Vorsprung 25 über die Anschlagflächen 26 beziehungsweise 27 wirken und aufgrund der dadurch bedingten Kopplung die Drehmomentübertragung bei gleichzeitiger Dämpfungskopplung über den Zwischenflansch 23 auf die weitere Federeinheit, hier beispielsweise die Federeinheit 22, und von dieser auf den Flansch 24, der den Ausgangsteil A bildet, bewirken. Erfolgt eine Relativverdrehung zwischen den Mitnehmerscheiben 9.1, 9.2 und dem Flansch 24 in Größe des Freiwinkels F, wird auch die zweite Dämpferstufe 4 wirksam. Nach Erreichen dieses Freiwinkels F erfolgt die Leistungsübertragung zusätzlich über die zweite Dämpferstufe 4 ebenfalls auf den als Ausgangsteil A der Gesamtvorrichtung fungierenden Ausgang 12 der zweiten Dämpferstufe 4. Die einzelnen Federeinheiten 19, 22, 36 sind hier beispielsweise in Form von so genannten Druckfedern ausgeführt beziehungsweise als Spiralfedern. Andere Ausführungen elastischer Elemente sind theoretisch ebenfalls denkbar.

Die Ausbildung der drehfesten Kopplung zwischen den Mitnehmerscheiben 9.1 und 9.2 der Dämpferanordnung 5 kann unterschiedlich erfolgen. Im dargestellten Fall sind Befestigungselemente 38 vorgesehen, vorzugsweise in Form von Nieten. Diese können radial außerhalb der radialen Erstreckung der Federeinheiten 19, 22 der Dämpferstufe 3 liegen, wie in der Figur 1b dargestellt. Ferner kann die Anordnung radial außerhalb des Außendurchmessers des Zwischenflansches 23 erfolgen. Die drehfeste Kopplung kann gleichzeitig einen Anschlag in Umfangsrichtung und damit eine Verdrehwinkelbegrenzung für den Zwischenflansch 23 beziehungsweise den Flansch 24 bilden.

Eine zusätzliche drehfeste Kopplung der Mitnehmerscheiben für die zweite Dämpferstufe und damit die Dämpferanordnung 7 kann aufgrund der einteiligen Ausführung der Eingangsteile 8 und 10 der beiden Dämpferstufen 3, 4 entfallen.

Die Ausführungen gemäß der Figuren 1b und 1c verdeutlichen ferner eine Anordnung der einzelnen Dämpferstufen 3 und 4 in einer axialen Ebene, was insbesondere durch die Ausgestaltung des als Ausgangsteil A der Vorrichtung 1 fungierenden Ausgangsteiles 10 beziehungsweise 12 der beiden Dämpferanordnungen 5 und 7 realisiert wird. Dieses ist, wie bereits ausgeführt, im einfachsten Fall als scheibenförmiges Element ausgebildet.

Andere Ausführungen mit Versatz sind ebenfalls denkbar. In diesem Fall ist jedoch zumindest der Flansch 24 entsprechend auszuformen sowie die Mitnehmerscheiben 9.1 und 9.2. Die in der Figur 1 dargestellte Ausführung stellt jedoch eine besonders vorteilhafte Ausbildung im Hinblick auf die Bauraumerfordernisse dar. Dies gilt in Analogie auch für die Anordnung der beiden Dämpfer 6.1 und 6.2 in radialer Richtung sowie in axialer Richtung zueinander. Diese sind in radialer Richtung vorzugsweise frei von Versatz auf einem gemeinsamen Durchmesser d₃ angeordnet und in Axialrichtung ebenfalls in einer Ebene. Dadurch kann die Reihen-Parallel-Dämpferanordnung durch einen hohen Grad an Funktionskonzentration bei gleichzeitig minimalem Bauraum realisiert werden.

Auch die Vorsprünge 30 am Außenumfang des Flansches 24 weisen Anschlagflächen 39.1, 39.2 auf, die mit entsprechend am Innenumfang 28 des Zwischenflansches 23 ausgebildeten und in Umfangsrichtung entgegengesetzt zu den Anschlagflächen 39.1, 39.2 ausgerichteten Anschlagflächen 40.1, 40.2 zusammenwirken. Diese bilden einen Blockschutz für die Federeinheiten 19, 22 in der ersten Dämpferstufe 3. Die Anschlagflächen 39.1, 39.2, 40.1, 40.2 sind daher derart angeordnet, dass diese lediglich eine Verdrehwinkelbegrenzung zwischen Zwischenflansch 23 und Flansch 24 bei einem bestimmten vordefinierten Federweg bilden.

Bei der in der Figur 1 dargestellten Ausführung fungieren beim Einsatz in einer Kraftübertragungsvorrichtung in Antriebssträngen für Fahrzeuge, wie bereits ausgeführt, die Mitnehmerscheiben 9.1 und 9.2 als Eingangsteil E und der Flansch 24 als Ausgangsteil A. Wird der Kraftfluss umgedreht, wird dem Flansch 24 die Funktion des Eingangsteiles E zugeteilt während die Mitnehmerscheiben 9.1, 9.2 dann als Ausgangsteil A fungieren. Ist eine derartige Vorrichtung in einem Antriebsstrang in beiden Kraftflussrichtungen jeweils hinsichtlich des Ein-und Ausgangsteiles mit entsprechenden antreibenden und anzutreibenden Elementen gekoppelt, wird immer Drehmoment mit dieser Vorrichtung gleichzeitig übertragen. Ist in einem Funktionszustand, beispielsweise im Schubbetrieb, keine Kopplung mit einem der das Ein-oder Ausgangsteil E, A bildenden Elemente vorhanden, fungiert die Vorrichtung 1 als Tilger, das heißt kompensiert Schwingungen und überträgt jedoch kein Drehmoment wie eine elastische Kupplung.

Die Figur 1 verdeutlicht eine besonders kompakte und für den Einsatz in Kraftübertragungsvorrichtungen für Fahrzeuge, umfassend eine hydrodynamische Komponente und eine Überbrückungseinrichtung für die hydrodynamische Komponente geeignete Vorrichtung, die in Reihe zur hydrodynamischen Komponente als auch zur Überbrückungseinrichtung angeordnet ist.

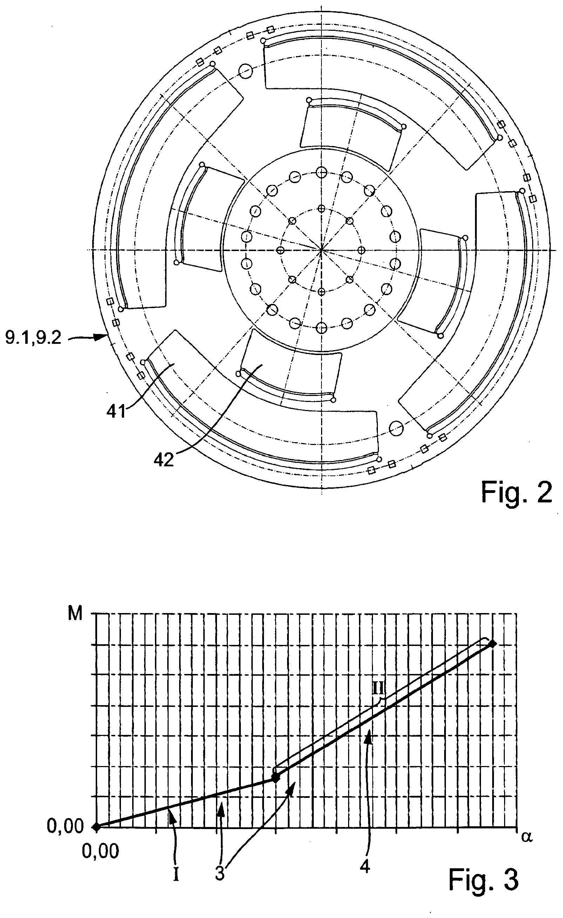

Die Figur 2 verdeutlicht in schematisiert vereinfachter Darstellung eine Seitenansicht auf die Seitenscheiben in Form der Mitnehmerscheiben 9.1 und 9.2 der Vorrichtung 1 gemäß Figur 1. Erkennbar ist hier ebenfalls eine scheibenförmige Ausgestaltung in Form einer Ringscheibe mit in Umfangsrichtung ausgebildeten Öffnungen 41 zur Aufnahme der Federeinheiten 19 und 22 der Dämpfer 6.1 und 6.2 und Abstützungen in Umfangsrichtung und radialer Richtung. In Analogie dazu weisen die Mitnehmerscheiben Öffnungen 42 für die zweite Dämpferanordnung 7 auf, die auf einem kleineren Durchmesser angeordnet sind und die Federeinheit 36 aufnehmen.

Die erfindungsgemäße Ausführung gemäß Figur 1 und 2 ist durch einen hohen Grad an Funktionskonzentration, eine hohe Kompaktheit sowie gleichzeitig eine geringe Bauteilanzahl charakterisiert. Ferner ist es mit dieser Ausführung möglich, einen Torsionsschwingungsdämpfer mit möglichst niedriger Federrate zu gestalten, der einen möglichst großen Verdrehwinkel mit niedriger Reibung aufweist. Dies wird auch dadurch realisiert, dass vorzugsweise die Reihendämpferanordnung auf dem größeren Durchmesser angeordnet ist.

Die Figur 3 verdeutlicht anhand eines Verdrehwinkel-/Momentendiagramms α/M die Dämpferkennlinie für die Gesamtdämpfereinheit. Daraus ist ersichtlich, dass diese in einem ersten Verdrehwinkelbereich, der durch einen geringen Verdrehwinkel und geringe Momente charakterisiert ist, flacher verläuft und bei Zuschaltung der zweiten Dämpferstufe 4 die Kennlinie ansteigt. Der erste Bereich ist mit I und der zweite Bereich mit II bezeichnet.

### Bezugszeichenliste

| | |
|---|---|
| 1 | Vorrichtung zur Dämpfung von Schwingungen |
| 2 | mehrstufiger Reihen-/Paralleldämpfer |
| 3 | erste Dämpferstufe |
| 4 | zweite Dämpferstufe |
| 5 | Dämpferanordnung |
| 6.1, 6.2 | Dämpfer |
| 7 | Dämpferanordnung |
| 8 | Eingangsteil |
| 9.1, 9.2 | Mitnehmerscheibe |
| 10 | Ausgangsteil |
| 11 | Eingangsteil |
| 12 | Ausgangsteil |
| 13 | Eingangsteil |
| 14 | Ausgangsteil |
| 15 | Eingangsteil |
| 16 | Ausgangsteil |
| 17 | Mittel zur Drehmomentübertragung |
| 18 | Mittel zur Dämpfungskopplung |
| 19 | Federeinheit |
| 20 | Mittel zur Drehmomentübertragung |
| 21 | Mittel zur Dämpfungskopplung |
| 22 | Federeinheit |
| 23 | Zwischenflansch |
| 24 | Flansch |
| 25 | Vorsprung |
| 26 | Anschlagfläche |
| 27 | Anschlagfläche |
| 28 | Innenumfang |
| 29 | Außenumfang |
| 30 | Vorsprung |
| 31 | Seitenfläche |
| 32 | Seitenfläche |
| 33 | Ausnehmung |
| 34 | Mittel zur Drehmomentübertragung |
| 35 | Mittel zur Dämpfungskopplung |
| 36 | Federeinheit |
| 37.1, 37.2 | Anschlagflächen |
| 38 | Befestigungselement |
| 39.1, 39.2 | Anschlagfläche |
| 40.1, 40.2 | Anschlagfläche |
| 41 | Öffnung |
| 42 | Öffnung |
| R | Rotationsachse |
| M | Moment |
| α | Verdrehwinkel |
| F | Freiwinkel |
| d | Durchmesser |
| E | Eingangsteil |
| A | Ausgangsteil |

## Patentansprüche

1. Kraftübertragungseinrichtung
umfassend eine hydrodynamische Komponente und
eine Überbrückungskupplung
sowie eine Vorrichtung (1) zur Dämpfung von Schwingungen, insbesondere mehrstufiger Reihen-Parallel-Schwingungsdämpfer,
umfassend zumindest zwei parallel geschaltete, koaxial angeordnete und zumindest jeweils einen Eingangsteil (8, 11) und einen Ausgangsteil (10, 12) aufweisende Dämpferanordnungen (5, 7),
eine erste Dämpferanordnung (5), die als Reihendämpfer, umfassend zumindest zwei in Reihe geschaltete und über einen Zwischenflansch (23) gekoppelte Dämpfer (6.1, 6.2) ausgebildet ist und
eine zweite Dämpferanordnung (7) wobei
das Ausgangsteil (10) der ersten Dämpferanordnung (5) mit dem Ausgangsteil (12) der zweiten Dämpferanordnung (7) eine bauliche Einheit bildet und
erste und zweite Dämpferanordnung (5, 7) in radialer Richtung auf unterschiedlichen Durchmessern (d3, d4) angeordnet sind, **dadurch gekennzeichnet, dass**
die Vorrichtung zur Dämpfung von Schwingungen der hydrodynamischen Komponente nachgeschaltet angeordnet ist und
dass die zweite Dämpferanordnung mit Verdrehspiel ausgeführt ist, wobei die erste Dämpferanordnung (5) in radialer Richtung auf einem größeren Durchmesser (d₃) angeordnet ist, als die zweite Dämpferanordnung (7).

2. Kraftübertragungseinrichtung nach Anspruch 1, **dadurch gekennzeichnet, dass** die Eingangsteile (8, 11) der parallel geschalteten Dämpferanordnungen (5, 7) von einer Baueinheit gebildet werden.

3. Kraftübertragungseinrichtung nach Anspruch 1 oder 2, **dadurch gekennzeichnet, dass** das Ausgangsteil (10) der ersten Dämpferanordnung (5) mit dem Ausgangsteil (12) der zweiten Dämpferanordnung (7) einstückig ausgeführt ist.

4. Kraftübertragungseinrichtung nach einem der Ansprüche 1 bis 3, **dadurch gekennzeichnet, dass** das Verdrehspiel der zweiten Dämpferanordnung (5) durch einen vordefinierten, einen Freiwinkel (F) beschreibenden Verdrehwinkel zwischen Eingangsteil (11) und Ausgangsteil (12) der zweiten Dämpferanordnung (7) bestimmt ist und der Verdrehwinkel im Ausgangsteil (12) integriert ist.

5. Kraftübertragungseinrichtung nach einem der Ansprüche 1 bis 4, **dadurch gekennzeichnet, dass** die erste Dämpferanordnung (5) und die zweite Dämpferanordnung (7) in einer axialen Ebene angeordnet sind.

6. Kraftübertragungseinrichtung nach einem der Ansprüche 1 bis 4, **dadurch gekennzeichnet, dass** die erste Dämpferanordnung und die zweite Dämpferanordnung (7) in Einbaulage in axialer Richtung versetzt zueinander angeordnet sind.

7. Kraftübertragungseinrichtung nach einem der Ansprüche 1 bis 6, **dadurch gekennzeichnet, dass** jede Dämpferanordnung (5, 7) zumindest einen ein- oder mehrteiligen Eingangsteil (8, 11) und einen ein- oder mehrteiligen Ausgangsteil (10, 12) aufweist, die über Mittel (17, 20, 34) zur Drehmomentübertragung und über Mittel (18, 21, 35) zur Dämpfungskopplung miteinander gekoppelt sind und in Umfangsrichtung relativ zueinander begrenzt verdrehbar sind.

8. Kraftübertragungseinrichtung nach Anspruch 7, **dadurch gekennzeichnet, dass** die Mittel (17, 20, 34) zur Drehmomentübertragung und die Mittel (18, 21, 35) zur Dämpfungskopplung von einer Baueinheit gebildet werden, umfassend zumindest ein elastisches Element, insbesondere eine Federeinheit (19, 22, 36).

9. Kraftübertragungseinrichtung nach einem der Ansprüche 1 bis 8, **dadurch gekennzeichnet, dass** die zwei in Reihe geschalteten Dämpfer (6.1, 6.2) der ersten Dämpferanordnung (5) in axialer Richtung in einer Ebene angeordnet sind.

10. Kraftübertragungseinrichtung nach einem der Ansprüche 1 bis 9, **dadurch gekennzeichnet, dass** die zwei in Reihe geschalteten Dämpfer (6.1, 6.2) der ersten Dämpferanordnung (5) in Umfangsrichtung auf einem gemeinsamen Durchmesser angeordnet sind.

11. Kraftübertragungseinrichtung nach einem der Ansprüche 1 bis 10, **dadurch gekennzeichnet, dass** der Eingangsteil (8) der ersten Dämpferanordnung (5) drehfest mit dem Eingangsteil (11) der zweiten Dämpferanordnung (7) verbunden ist.

12. Kraftübertragungseinrichtung nach einem der Ansprüche 1 bis 10, **dadurch gekennzeichnet, dass** der Eingangsteil (8) der ersten Dämpferanordnung (5) mit dem Eingangsteil (11) der zweiten Dämpferanordnung (7) von einer baulichen Einheit gebildet wird.

13. Kraftübertragungseinrichtung nach einem der Ansprüche 1 bis 12, **dadurch gekennzeichnet, dass** der Eingangsteil (8, 11) der ersten und zweiten Dämpferanordnung (5, 7) von zwei in axialer Richtung zueinander beabstandeten Scheibenelementen (9.1, 9.2) gebildet wird und der Ausgangsteil (10, 12) von einem zwischen den Scheibenelementen (9.1, 9.2) angeordneten Flansch (24) in Form eines ringförmigen Scheibenelementes.

14. Kraftübertragungseinrichtung nach einem der Ansprüche 1 bis 12, **dadurch gekennzeichnet, dass** der Ausgangsteil (10, 12) der ersten und zweiten Dämpferanordnung (5, 7) von zwei in axialer Richtung zueinander beabstandeten Scheibenelementen (9.1, 9.2) gebildet wird und der Eingangsteil (8, 11) von einem zwischen den Scheibenelementen (9.1, 9.2) angeordneten Flansch (24) in Form eines ringförmigen Scheibenelementes.

15. Kraftübertragungseinrichtung nach einem der Ansprüche 13 oder 14, **dadurch gekennzeichnet, dass** der Flansch (24) als ringscheibenförmiges Element mit in radialer Richtung am Außenumfang (29) in Umfangsrichtung in gleichmäßigen Abständen angeordneten und in radialer Richtung nach außen gerichteten Vorsprünge (30) umfasst, die in Umfangsrichtung Anschlagflächen für die Mittel (17, 20, 34) zur Drehmomentübertragung und die Mittel (18, 21, 35) zur Dämpfungskopplung bilden und ferner Ausnehmungen (33), in welchen die Federeinheiten (36) der zweiten Dämpferanordnung (7) sich abstützen können.

16. Kraftübertragungseinrichtung nach einem der Ansprüche 1 bis 15, **dadurch gekennzeichnet, dass** der Zwischenflansch (23) als ringförmiges Element mit in radialer Richtung am Innenumfang (28) vorgesehenen Vorsprüngen (25) ausgeführt ist, die in Umfangsrichtung randoffene Aussparungen am Innenumfang (28) bilden und an den voneinander weg weisenden Flächenbereichen Anschlagflächen für die Federeinheiten (19, 22) bilden.

17. Kraftübertragungseinrichtung nach einem der Ansprüche 1 bis 16, **dadurch gekennzeichnet, dass** der Verdrehwinkel F in den Bereich zwischen 3 bis 50° liegt.

## Claims

1. Power transmission means
comprising a hydrodynamic component and
a lock-up clutch
and also a device (1) for damping vibrations, in particular a multistage series-parallel vibration damper,
comprising at least two coaxially arranged damper arrangements (5, 7) which are connected in parallel and which have at least in each case one input part (8, 11) and one output part (10, 12),
a first damper arrangement (5), which is formed as a series damper comprising at least two dampers (6.1, 6.2) connected in series and coupled via an intermediate flange (23), and
a second damper arrangement (7), wherein
the output part (10) of the first damper arrangement (5) forms a structural unit with the output part (12) of the second damper arrangement (7) and
the first and second damper arrangements (5, 7) are arranged at different diameters (d3, d4) in the radial direction, **characterized in that**
the device for damping vibrations is arranged so as to be connected downstream of the hydrodynamic component, and
**in that** the second damper arrangement is formed with rotational play, wherein the first damper arrangement (5) is arranged at a larger diameter (d₃) in the radial direction than the second damper arrangement (7).

2. Power transmission means according to claim 1, **characterized in that** the input parts (8, 11) of the damper arrangements (5, 7) which are connected in parallel are formed as a structural unit.

3. Power transmission means according to claim 1 or 2, **characterized in that** the output part (10) of the first damper arrangement (5) is formed in one piece with the output part (12) of the second damper arrangement (7).

4. Power transmission means according to one of claims 1 to 3, **characterized in that** the rotational play of the second damper arrangement (5) is determined by a predefined rotational angle, which describes a free angle (F), between the input part (11) and output part (12) of the second damper arrangement (7), and the rotational angle is integrated in the output part (12).

5. Power transmission means according to one of claims 1 to 4, **characterized in that** the first damper arrangement (5) and the second damper arrangement (7) are arranged in an axial plane.

6. Power transmission means according to one of claims 1 to 4, **characterized in that** the first damper arrangement and the second damper arrangement (7) are arranged offset with respect to one another in the axial direction when in the installed position.

7. Power transmission means according to one of claims 1 to 6, **characterized in that** each damper arrangement (5, 7) has at least one single-part or multi-part input part (8, 11) and one single-part or multi-part output part (10, 12), which are coupled to one another via means (17, 20, 34) for torque transmission and via means (18, 21, 35) for damped coupling and are rotatable relative to one another to a limited extent in the circumferential direction.

8. Power transmission means according to claim 7, **characterized in that** the means (17, 20, 34) for torque transmission and the means (18, 21, 35) for damped coupling are formed as a structural unit comprising at least one elastic element, in particular a spring unit (19, 22, 36).

9. Power transmission means according to one of claims 1 to 8, **characterized in that** the two dampers (6.1, 6.2), which are connected in series, of the first damper arrangement (5) are arranged in a plane in the axial direction.

10. Power transmission means according to one of claims 1 to 9, **characterized in that** the two dampers (6.1, 6. 2), which are connected in series, of the first damper arrangement (5) are arranged at a common diameter in the circumferential direction.

11. Power transmission means according to one of claims 1 to 10, **characterized in that** the input part (8) of the first damper arrangement (5) is rotationally conjointly connected to the input part (11) of the second damper arrangement (7).

12. Power transmission means according to one of claims 1 to 10, **characterized in that** the input part (8) of the first damper arrangement (5) is formed as a structural unit with the input part (11) of the second damper arrangement (7).

13. Power transmission means according to one of claims 1 to 12, **characterized in that** the input part (8, 11) of the first and second damper arrangements (5, 7) is formed by two disc elements (9.1, 9.2) which are spaced apart from one another in the axial direction, and the output part (10, 12) is formed by a flange (24) which is arranged between the disc elements (9.1, 9.2) and which is in the form of an annular disc element.

14. Power transmission means according to one of claims 1 to 12, **characterized in that** the output part (10, 12) of the first and second damper arrangements (5, 7) is formed by two disc elements (9.1, 9.2) which are spaced apart from one another in the axial direction, and the input part (8, 11) is formed by a flange (24) which is arranged between the disc elements (9.1, 9.2) and which is in the form of an annular disc element.

15. Power transmission means according to one of claims 13 or 14, **characterized in that** the flange (24), as an annular-disc-shaped element, comprises projections (30) which are arranged in the radial direction on the outer circumference (29) at uniform intervals in the circumferential direction and which are directed outward in the radial direction, which projections, in the circumferential direction, form stop surfaces for the means (17, 20, 34) for torque transmission and the means (18, 21, 35) for damped coupling, and also comprises recesses (33) in which the spring units (36) of the second damper arrangement (7) can be supported.

16. Power transmission means according to one of claims 1 to 15, **characterized in that** the intermediate flange (23) is formed as an annular element with projections (25) provided in the radial direction on the inner circumference (28), which projections form cutouts, which are open at the edge in the circumferential direction, on the inner circumference (28) and, at the surface regions pointing away from one another, form stop surfaces for the spring units (19, 22).

17. Power transmission means according to one of claims 1 to 16, **characterized in that** the rotational angle F lies in the range of 3 to 50°.

## Revendications

1. Dispositif de transformation de puissance comprenant un composant hydrodynamique et un embrayage de verrouillage ainsi qu'un dispositif (1) d'amortissement des vibrations, notamment un amortisseur de vibrations série-parallèle à plusieurs niveaux ;
comprenant au moins deux agencements d'amortisseur (5, 7) connectés en parallèle, disposés dans le plan coaxial et comprenant au moins respectivement une partie d'entrée (8, 11) et une partie de sortie (10, 12) comportant :
un premier agencement d'amortisseur (5) réalisé sous la forme d'un amortisseur en série, comprenant au moins deux amortisseurs (6.1, 6.2) connectés en série et couplés au travers d'un flasque intermédiaire (23) et un deuxième agencement d'amortisseur (7) ;
la partie de sortie (10) du premier agencement d'amortisseur (5) formant une unité de construction avec la partie de sortie (12) du deuxième agencement d'amortisseur (7) ; et
les premier et deuxième agencements d'amortisseur (5, 7) étant disposés sur différents diamètres (d3, d4) dans la direction radiale ;
**caractérisé en ce que** :
le dispositif d'amortissement des vibrations est disposé de façon à être connecté en aval du composant hydrodynamique ; le deuxième agencement d'amortisseur est réalisé avec un jeu de torsion, le premier agencement d'amortisseur (5) étant disposé, dans la direction radiale, sur un plus grand diamètre (d₃) que le deuxième agencement d'amortisseur (7).

2. Dispositif de transformation de puissance selon la revendication 1, **caractérisé en ce que** les parties d'entrée (8, 11) des agencements d'amortisseur (5, 7) connectés en parallèle forment une unité de construction.

3. Dispositif de transformation de puissance selon la revendication 1 ou 2, **caractérisé en ce que** la partie de sortie (10) du premier agencement d'amortisseur (5) est réalisée d'un seul tenant avec la partie de sortie (12) du deuxième agencement d'amortisseur (7).

4. Dispositif de transformation de puissance selon l'une quelconque des revendications 1 à 3, **caractérisé en ce que** le jeu de torsion du deuxième agencement d'amortisseur (5) est défini par un angle de torsion prédéfini décrivant un angle d'incidence (F) entre la partie d'entrée (11) et la partie de sortie (12) du deuxième agencement d'amortisseur (7) et l'angle de torsion est intégré dans la partie de sortie (12).

5. Dispositif de transformation de puissance selon l'une quelconque des revendications 1 à 4, **caractérisé en ce que** le premier agencement d'amortisseur (5) et le deuxième agencement d'amortisseur (7) sont disposés dans un plan axial.

6. Dispositif de transformation de puissance selon l'une quelconque des revendications 1 à 4, **caractérisé en ce que** le premier agencement d'amortisseur et le deuxième agencement d'amortisseur (7) sont disposés de façon décalée les uns par rapport aux autres dans la direction axiale dans la position encastrée.

7. Dispositif de transformation de puissance selon l'une quelconque des revendications 1 à 6, **caractérisé en ce que** chaque agencement d'amortisseur (5, 7) comporte au moins une partie d'entrée (8, 11) réalisée en une ou plusieurs parties et une partie de sortie (10, 12) réalisée en une ou plusieurs parties qui sont couplées entre elles au travers de moyens (17, 20, 34) de transmission de couple de rotation et de moyens (18, 21, 35) de couplage d'amortissement et pouvant être amenées en torsion limitée l'une par rapport à l'autre dans la direction circonférentielle.

8. Dispositif de transformation de puissance selon la revendication 7, **caractérisé en ce que** les moyens (17, 20, 34) de transmission de couple de rotation et les moyens (18,21, 35) de couplage d'amortissement forment une unité de construction, comprenant au moins un élément élastique, notamment une unité de ressort (19, 22, 36).

9. Dispositif de transformation de puissance selon l'une quelconque des revendications 1 à 8, **caractérisé en ce que** les deux amortisseurs (6.1, 6.2) connectés en série du premier agencement d'amortisseur (5) sont disposés dans un plan dans la direction axiale.

10. Dispositif de transformation de puissance selon l'une quelconque des revendications 1 à 9, **caractérisé en ce que** les deux amortisseurs (6.1, 6.2) connectés en série du premier agencement d'amortisseur (5) sont disposés sur un diamètre commun dans la direction circonférentielle.

11. Dispositif de transformation de puissance selon l'une quelconque des revendications 1 à 10, **caractérisé en ce que** la partie d'entrée (8) du premier agencement d'amortisseur (5) est reliée solidairement en rotation à la partie d'entrée (11) du deuxième agencement d'amortisseur (7).

12. Dispositif de transformation de puissance selon l'une quelconque des revendications 1 à 10, **caractérisé en ce que** la partie d'entrée (8) du premier agencement d'amortisseur (5) forme une unité de construction avec la partie d'entrée (11) du deuxième agencement d'amortisseur (7).

13. Dispositif de transformation de puissance selon l'une quelconque des revendications 1 à 12, **caractérisé en ce que** la partie d'entrée (8, 11) des premier et deuxième agencements d'amortisseur (5, 7) est constituée de deux éléments de disque (9.1, 9.2) placés à une certaine distance l'un de l'autre dans la direction axiale et la partie de sortie (10, 12) est constituée d'un flasque (24) disposé entre les éléments de disque (9.1,9.2) prenant la forme d'un élément de disque annulaire.

14. Dispositif de transformation de puissance selon l'une quelconque des revendications 1 à 12, **caractérisé en ce que** la partie de sortie (10, 12) du premier et deuxième agencement d'amortisseur (5, 7) est constituée de deux éléments de disque (9.1, 9.2) placés à une certaine distance l'un de l'autre dans la direction axiale et la partie d'entrée (8, 11) est constituée d'un flasque (24) disposé entre les éléments de disque (9.1, 9.2) prenant la forme d'un élément de disque annulaire.

15. Dispositif de transformation de puissance selon l'une quelconque des revendications 13 ou 14, **caractérisé en ce que** le flasque (24) comprend un élément en forme de disque annulaire avec des saillies (30) orientées vers l'extérieur dans la direction radiale et disposées à des distances constantes dans la direction circonférentielle, dans la direction radiale, au niveau de la périphérie extérieure (29), lesdites saillies formant des surfaces de butée dans la direction circonférentielle pour les moyens (17, 20, 34) de transmission de couple de rotation et les moyens (18, 21, 35) de couplage d'amortissement et qu'il comprend en outre des évidements (33) dans lesquels les unités de ressort (36) du deuxième agencement d'amortisseur (7) peuvent buter.

16. Dispositif de transformation de puissance selon l'une quelconque des revendications 1 à 15, **caractérisé en ce que** le flasque intermédiaire (23) est réalisé sous la forme d'un élément annulaire avec des saillies (25) prévues dans la direction radiale au niveau de la périphérie intérieure (28), lesdites saillies formant des évidements ouverts en bordure dans la direction circonférentielle, au niveau de la périphérie intérieure (28), et formant des surfaces de butée prévues pour les unités de ressort (19, 22) au niveau des zones de surface s'écartant les unes des autres.

17. Dispositif de transformation de puissance selon l'une quelconque des revendications 1 à 16, **caractérisé en ce que** l'angle de torsion F se situe dans la plage comprise entre 3 à 50°.
